Europäisches Patentamt

European Patent Office

Office européen des brevets

(19)

(11) Veröffentlichungsnummer : **0 136 405**
**B1**

(12) **EUROPÄISCHE PATENTSCHRIFT**

(45) Veröffentlichungstag der Patentschrift :
09.09.87

(51) Int. Cl.⁴ : **B 01 J 19/06, C 01 B 31/32**

(21) Anmeldenummer : **84106911.5**

(22) Anmeldetag : **16.06.84**

(54) Giess- und Kühlstrasse für flüssiges Material, insbesondere Calciumcarbid.

(30) Priorität : 05.10.83 DE 3336165

(43) Veröffentlichungstag der Anmeldung :
10.04.85 Patentblatt 85/15

(45) Bekanntmachung des Hinweises auf die Patenterteilung : 09.09.87 Patentblatt 87/37

(84) Benannte Vertragsstaaten :
AT DE FR GB IT

(56) Entgegenhaltungen :
AT-B-    30 456
DE-B- 1 096 340
DE-C-   205 578
DE-C-   743 994

(73) Patentinhaber : **MAN GUTEHOFFNUNGSHÜTTE GMBH**
**Bahnhofstrasse, 66 Postfach 11 02 40**
**D-4200 Oberhausen 11 (DE)**

(72) Erfinder : **Kämmerling, Bruno**
**Albrecht Dürer-Strasse 18**
**D-4220 Dinslaken (DE)**
Erfinder : **Keller, Anton**
**Josef Danzer-Strasse 17**
**D-8033 Planegg (DE)**
Erfinder : **Münch, Erwin**
**Zu den Gärten 4**
**D-4100 Duisburg 14 (DE)**
Erfinder : **Friedrich, Peter, Dr.**
**Altenhamer Strasse 11, Emertsham**
**D-8221 Tacherting (DE)**
Erfinder : **Scholz, Werner**
**Wendelstein 10**
**D-8223 Trostberg (DE)**

## Beschreibung

Die Erfindung betrifft ein Verfahren und eine Vorrichtung zum Kühlen von flüssigem hochschmelzenden oberflächig schnell abhärtenden Material, insbesondere Calciumcarbid, auf einer kettengetriebenen Gieß- und Kühlstraße, wobei das zu kühlende Material im kontinuierlichen Fluß auf eine sich fortbewegende Gieß- und Kühlstraße aufgegeben, auf dem Transportweg durch die Umgebungsluft gekühlt und am Abwurfende der Gieß- und Kühlstraße ggf. zerkleinert wird.

Es sind bereits Gieß- und Kühlstraßen für die im Oberbegriff des Hauptanspruchs bezeichneten Materialien bekannt. So werden, z. B. nach DE-C-743 994, auf einer derartigen Straße zur Kühlung von aus dem Ofen kommenden flüssigen Calciumcarbid hintereinander angeordnete Mulden aus Gußeisen, die in eine zweisträngige Gall'sche Kette eingehängt sind, von letzterer gezogen. Das Calciumcarbid, das mit einer Temperatur von mindestens 2 000 °C aus dem Ofen austritt, fließt in die an der Gießrinne vorbeifahrenden Mulden der Gieß- und Kühlstraße.

Die Mulden, die üblicherweise je Mulde ca. 15-20 kg Calciumcarbid aufnehmen, weisen auf ihrer Innenseite Rippen auf, die dazu dienen, eine Portionierung des zu kühlenden Muldeninhalts (Massel) zu bewerkstelligen, das heißt ein leichteres Brechen der gekühlten Masseln beim Abwurf von der Kühlstrecke zu erreichen.

Die bekannte Gieß- und Kühlstraße weist jedoch eine Anzahl von Mängeln auf, die sich sowohl auf die Standzeit der Mulden als auch auf die Leistungsfähigkeit der Gieß- und Kühlstraße auswirken.

Bei den gerippten Mulden traten infolge der konstruktionsbedingten unterschiedlichen Wandstärken und Füllungsgrade wechselnde Hitzebeanspruchungen auf, die zu Rißbildungen führten. Derartige Rißbildungen setzten die Standzeit der Mulden herab.

Zum anderen wird aber das Lösen der Masseln beim Abwurf erschwert, wenn die Mulden Risse enthalten, weil sich zu kühlendes Gut in flüssiger Form in die Risse setzt und die Massel sich dadurch nach ihrer Erhärtung nicht aus der Mulde löst. Insofern kam es immer wieder dazu, daß nicht entleerte Mulden mit bereits gekühltem Gut abermals auf der Gieß- und Kühlstraße umliefen und erneut vom flüssigen Gut übergossen wurden.

Abhilfe beim Entleeren der Mulden am Abwurf sollte eine Klopfeinrichtung bringen, die jedoch vielfach die Rißbildung beschädigter Mulden bis zum totalen Bruch vergrößerte.

Man hat sich auch damit geholfen, daß man das Muldeninnere vor Aufgabe des flüssigen Calciumcarbids mit einer Schutzschicht aus Kalkmilch beschichtete. Naturgemäß bedeckte diese Schicht aber nur den Boden der Mulden und nicht die gefährdeten Seitenwandungen. Die plötzliche Abschreckung der noch heißen Mulden durch Kalkmilch führte zu hohen thermischen Beanspruchungen.

Der Erfindung liegt die Aufgabe zugrunde, ein Verfahren zum Kühlen von flüssigen, hochschmelzenden, oberflächig schnell abhärtenden Material, insbesondere Calciumcarbid vorzuschlagen, mit dem es möglich ist derartiges Material kontinuierlich in gleicher Menge mit gegenüber dem Stand der Technik verbesserter Kühlwirkung auf einer Gieß- und Kühlstraße zu behandeln. Desweiteren soll eine Gieß- und Kühlstraße des Standes der Technik vorrichtungsmäßig verbessert werden.

Diese Aufgabe löst die Erfindung in der Weise, wie in den Merkmalen der Patentansprüche angegeben.

Die erfindungsgemäße Gieß- und Kühlstraße besteht aus einem Plattenband, das in bekannter Weise von einer zweisträngigen Gall'schen Kette oder einem anderen Zugmittel angetrieben wird.

Die Platten des Bandes sind seitlich zum Zugmittel hin hochgekantet. Die einzelnen Platten überlappen sich berührend oder können auch Stoß-an-Stoß angeordnet sein.

Bei berührender Überlappung der Platten des Plattenbandes erweist es sich als vorteilhaft, daß auf diese Weise eine Bruchkante zum Auseinanderbrechen des gekühlten Guts am Abwurfende des Plattenbandes vorprogrammiert ist.

Das auf das Plattenband aufgegossene Material z. B. flüssiges Calciumcarbid aus einem Calciumcarbidofen verteilt sich unbehindert auf den Platten des Bandes unter Bildung eines endlosen, nicht unterbrochenen Belages. Die Schichtstärke des zu kühlenden Gutes auf dem erfingungsgemäßen Band ist geringer als die Füllhöhe der Masseln bei einer muldenbestückten Kühlstraße des Standes der Technik bei gleicher Leistung, weil bei dem erfindungsgemäßen Plattenband, die durch die Querwände und Rippen der Mulden hervorgerufenen Toträume fortfallen. Die geringere Schichtstärke des erfindungsgemäßen Kühlbandes bewirkt eine schnellere Oberflächenhärtung des zu kühlenden Gutes, weshalb bei gleichen Abmessungen von Mulden-Kühlstraße und Plattenband-Kühlstraße bei letzterer durch eine höhere Bandgeschwindigkeit eine größere Leistung erzielt werden kann.

Die Platten der erfindungsgemäßen Gieß- und Kühlstraße können vor Aufgabe des flüssigen Guts mit einer Schutzschicht aus einem geeigneten körnigen oder pulverförmigen Material versehen werden. Dieses kann z. B. mittels einer Aufgabevorrichtung trocken oder angefeuchtet auf das Plattenband aufgegeben werden, wobei eine ganzflächige Beschlichtung sichergestellt ist.

Bei einem Plattenband mit Stoß-an-Stoß-Anordnung der Platten kann es erforderlich sein, am Abwurfende der Kühlstraße eine Zerkleinerungseinrichtung vorzusehen, weil evtl. bei dieser Bandausführung das Abbrechen des oberflächig abgehärteten Kuchens nicht selbsttätig in Stücken entsprechend dem Maß einer Plattenlänge erfolgt.

Der zwischen den Platten der letztgenannten Plattenbandausführung vorhandene geringe Spalt ist unbedenklich, wenn die Platten zuvor beschlichtet worden sind. Dadurch wird verhindert, daß flüssiges Gut durch den Spalt fließt.

Anhand der schematischen Zeichnung werden Ausführungsbeispiele der erfindungsgemäßen Gieß- und Kühlstraße näher erläutert.

Es zeigen

Figur 1 die schematische Darstellung einer erfindungsgemäßen Gieß- und Kühlstraße,

Figur 2 eine Draufsicht zu Fig. 1,

Figuren 3-5 verschiedene Ausführungen der Platten des Plattenbandes im Längsschnitt und

Figur 6 eine Platte gemäß Fig. 3-5 im Querschnitt.

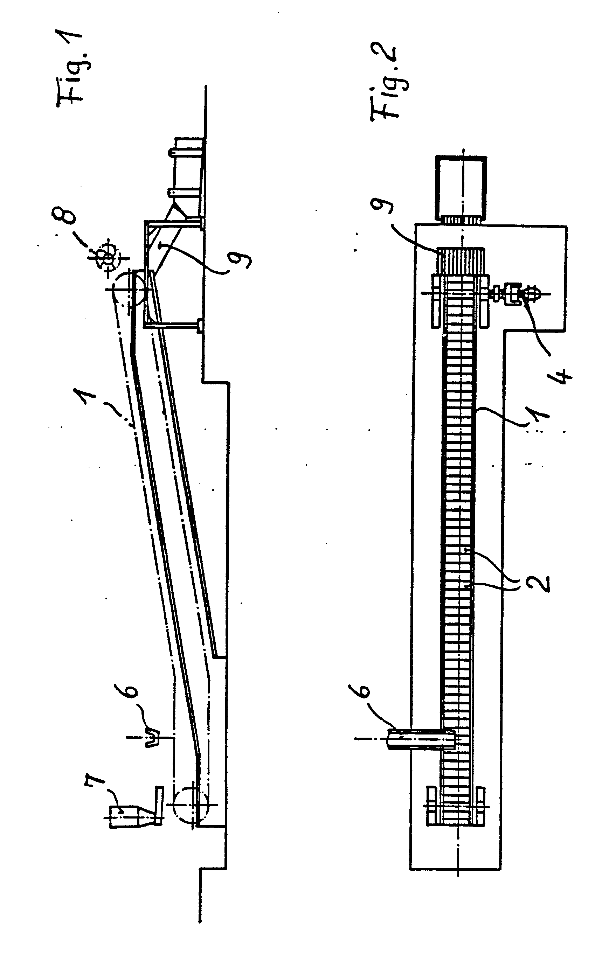

In den Figuren 1 bis 2 ist eine erfindungsgemäße Gieß- und Kühlstraße dargestellt. Das Plattenband 1, das zum Abwurfende 9 ansteigend angeordnet ist, wird aus einzelnen Platten 2 gebildet, die in die durch einen Antrieb 4 angetriebene Gall'sche Kette 3 eingehängt sind.

Bei 6 befindet sich die vom Ofen kommende Gießrinne für das flüssige zu kühlende Gut. Dieses verteilt sich, unterstützt durch die Fortbewegung des Plattenbandes, unter Bildung eines zusammenhängenden endlosen Belages auf dem Band.

Eine eventuell anzuordnende Aufgabe- und Verteileinrichtung 7 für Beschlichtungsgut ist am Aufgabeende des Plattenbandes 1 angeordnet. Hier kann Beschlichtungsmaterial, beispielsweise Kalk, mit Hilfe einer Vibrationsrinne auf dem Plattenband verteilt werden.

Am Abwurfende 9 des Plattenbandes 1 kann, falls erforderlich, eine Zerkleinerungseinrichtung 8 zum Zerbrechen des ankommenden eventuelle nicht selbsttätig abbrechenden erstarrten Kühlgutes angebracht werden.

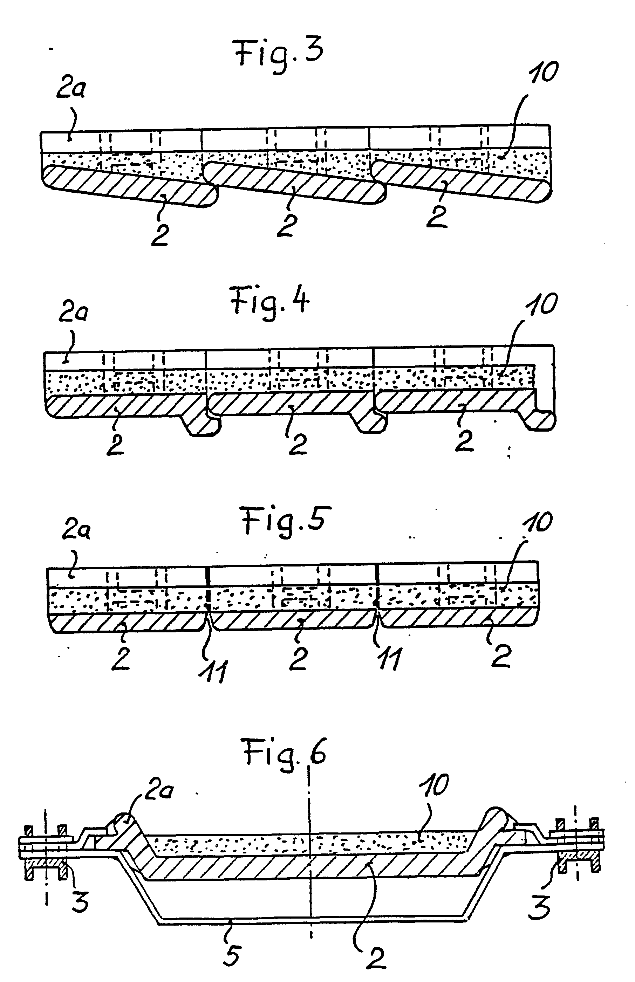

In Fig. 3 sind drei hintereinander angeordnete Platten 2 gezeigt. Die einzelnen Platten berühren sich und überlappen sich schuppenartig.

Auf die Platten kann, wie oben erwähnt, Beschlichtungsmaterial (nicht dargestellt) aufgetragen werden, auf das dann das flüssige zu kühlende Gut 10 aufgegeben wird. In Fig. 3 ist an den Überlappungsstellen der Platten 2 die Kühlgutschicht gegenüber der übrigen Plattenoberfläche eingeschnürt. Hierdurch entsteht eine Bruchkante, d. h. an dieser Kante kann der durchgehende Kühlgutbelag am Abwurfende 9 leicht von selbst brechen.

Fig. 4 zeigt eine andere Ausführungsform der Plattenüberlappung. Die Platten 2 besitzen hier an einem Ende unterseitig einen abgewinkelten Vorsprung, der unter die nächste Platte greift.

Die Platten 2, wie sie in Fig. 5 gezeigt werden, liegen Stoß-an-Stoß. Bei dieser Ausführung ist es zweckmäßig, das Plattenband vor Beschickung mit flüssigem Material mit Beschlichtungsmaterial in dünner Schicht zu bedecken. Dadurch werden auch die Spalte 11 zwischen den Platten 2 überdeckt, so daß kein Kühlgut 10 hindurchfließen kann.

Fig. 6 zeigt in einem Querschnitt durch das Band, daß die in die Gall'sche Ketten 3 eingehängten Platten 2 zu den Ketten hin hochgekantet 2a sind, um den Kühlgutbelag 10 seitlich zu begrenzen. Zur Konstruktion des Plattenbandes 1 ist schließlich noch der Tragbügel 5 angedeutet, der für jede Platte 2 vorgesehen ist.

## Patentansprüche

1. Verfahren zum Kühlen von flüssigem, hochschmelzendem, oberflächig schnell abhärtendem Material, insbesondere Calciumcarbid auf einer kettengetriebenen Gieß- und Kühlstraße, wobei das zu kühlende Material im kontinuierlichen Fluß auf eine sich fortbewegende Gieß- und Kühlstraße aufgegeben, auf dem Transportweg durch die Umgebungsluft gekühlt und am Abwurfende der Gieß- und Kühlstraße ggf. zerkleinert wird, dadurch gekennzeichnet, daß auf der Gieß- und Kühlstraße ein zusammenhängender, endloser Belag gebildet wird.

2. Verfahren nach Anspruch 1, dadurch gekennzeichnet, daß die Gieß- und Kühlstraße vor Aufgabe des zu kühlenden Materials (10) mit einem losen Material gleichmäßig trocken oder feucht beschlichtet wird.

3. Vorrichtung zur Durchführung des Verfahrens nach den Ansprüchen 1 und 2, dadurch gekennzeichnet, daß die Gieß- und Kühlstraße aus einem kettengetriebenen Plattenband (1) besteht, dessen Platten (2) sich in Straßenlängsachse berührend überlappen und deren dem Zugmittel (4) zugewandten Plattenseiten hochgekantet (2a) sind.

4. Vorrichtung zur Durchführung des Verfahrens nach den Ansprüchen 1 und 2, dadurch gekennzeichnet, daß die Gieß- und Kühlstraße aus einem kettengetriebenen Plattenband (1) besteht, dessen Platten (2) in Straßenlängsachse Stoß-an-Stoß angeordnet und deren dem Zugmittel (4) zugewandten Plattenseite (2a) hochgekantet sind.

5. Vorrichtung nach den Ansprüchen 3 und 4, dadurch gekennzeichnet, daß dem Plattenband (1) vor der Aufgabestelle (6) für das zu kühlende Material (10) eine Aufgabe- und Verteileinrichtung (7) für Beschlichtungsmaterial zugeordnet ist.

6. Vorrichtung nach den Ansprüchen 3 bis 5, dadurch gekennzeichnet, daß am Abwurfende (9) des Plattenbandes (1) eine Zerkleinerungseinrichtung (8) für das gekühlte Material (10) angeordnet ist.

## Claims

1. A method of cooling liquid, high-melting and superficially rapidly hardening material, particularly calcium carbide, on a chain-driven pouring and cooling line, the material to be cooled being fed in a continuous flow onto a moving pouring and cooling line, is cooled by the ambient air while it is in transit and is then if necessary comminuted at the discharge end of the pouring and cooling line, characterised in that a cohesive and endless covering is formed on the pouring and cooling line.

2. A method according to Claim 1, characterised in that prior to delivering to the pouring and cooling line the material (10) which is to be cooled, the line is evenly spread with a loose material, wet or dry.

3. An apparatus for carrying out the method according to Claims 1 and 2, characterised in that the pouring and cooling line consists of a chain-driven slatted band conveyor (1), the slats (2) of which contact and overlap one another in the longitudinal axis of the line, those sides of the slats which are towards the traction means (4) being upwardly tilted (2a).

4. An apparatus for carrying out the method according to Claims 1 and 2, characterised in that the 'pouring and cooling line consists of a chain-driven slatted band conveyor (1), of which the slats (2) are edge to edge in the longitudinal direction of the line, the sides of the slats which are towards the traction means (4) being upwardly tilted (2a).

5. An apparatus according to Claims 3 and 4, characterised in that upstream of the location (6) at which the material (10) to be cooled is delivered to the slatted band conveyor (1), there is associated with the conveyor (1) a means (7) for delivering and distributing surface treatment/coating material.

6. An apparatus according to Claims 3 to 5, characterised in that means (8) for comminuting the cooled material (10) are provided at the discharge end (9) of the slatted band conveyor (1).

**Revendications**

1. Procédé pour refroidir une matière fondue à haute température et se solidifiant rapidement en surface, en particulier du carbure de calcium, sur une ligne de coulée et de refroidissement entraînée par une chaîne, dans lequel la matière à refroidir est déposée en flux continu sur une ligne mobile de coulée et de refroidissement, puis refroidie sur le chemin de transport par l'air ambiant et, à l'extrémité de jetée de la ligne de coulée et de refroidissement, le cas échéant, cassée en petits morceaux, caractérisé par le fait que sur la ligne de coulée et de refroidissement se forme un dépôt sans fin, faisant corps avec la ligne.

2. Procédé selon la revendication 1, caractérisé par le fait que la ligne de coulée et de refroidissement, avant le versage de la matière (10) à refroidir, est enduite de façon homogène avec un matériau sec ou humide.

3. Dispositif pour l'application du procédé selon les revendications 1 et 2, caractérisé par le fait que la ligne de coulée et de refroidissement est constituée d'une bande (1) de plaques entraînée par une chaîne, dont les plaques (2) se touchent et se superposent dans l'axe longitudinal de la ligne, et dont les côtés de plaques présentent une arête de champ (2a) servant de moyen (4) d'entraînement.

4. Dispositif pour l'application du procédé selon les revendications 1 et 2, caractérisé par le fait que la ligne de coulée et de refroidissement est constituée d'une bande (1) de plaques entraînée par une chaîne, dont les plaques (2) sont disposées dans l'axe longitudinal de la ligne, bord à bord les unes par rapport aux autres, et dont les côtés de plaques présentent une arête de champ (2a) servant de moyen (4) d'entraînement.

5. Dispositif selon les revendications 3 et 4, caractérisé par le fait que sur la bande (1) de plaques est installé un équipement (7) de versage et de répartition d'un matériau à enduire, en amont de la position (6) de versage de la matière (10) à refroidir.

6. Dispositif selon les revendications 3 à 5, caractérisé par le fait qu'un équipement (8) de concassage est installé à l'extrémité de jetée (9) de la bande (1) de plaques pour la matière refroidie (10).

Fig. 1

Fig. 2

0 136 405

**Fig. 3**

**Fig. 4**

**Fig. 5**

**Fig. 6**